# EUROPÄISCHE PATENTSCHRIFT

(11) **EP 1 689 996 B1**
(45) Veröffentlichungstag und Bekanntmachung des Hinweises auf die Patenterteilung: **05.01.2011**
(21) Anmeldenummer: 04802667.8
(22) Anmeldetag: 03.11.2004
(51) Int. Cl.: F02K 9/52, F02K 9/44

(54) **EINSPRITZELEMENT**
INJECTION ELEMENT
DISPOSITIF D'INJECTION

(30) Priorität: 15.11.2003 DE 10353423
(43) Veröffentlichungstag der Anmeldung: 16.08.2006
(73) Patentinhaber: Astrium GmbH, 82024 Taufkirchen (DE)
(72) Erfinder: MAEDING, Chris, Udo, 85716 Unterschleissheim (DE)
(74) Vertreter: Avenhaus, Beate
(86) Internationale Anmeldenummer: PCT/DE2004/002430
(87) Internationale Veröffentlichungsnummer: WO 2005/049998

(56) Entgegenhaltungen:
- DE-A1- 10 130 355
- US-A- 3 439 503
- US-A- 3 459 001
- US-A- 3 498 059
- US-A- 3 675 425
- US-A- 5 172 548
- US-A1- 2003 074 886

## Beschreibung

Die Erfindung betrifft ein Einspritzelement, insbesondere für einen Raketenantrieb, gemäß den Oberbegriffen der Ansprüche 1 und 6.

Einspritzelemente dienen in einem Raketenantrieb der Gemischaufbereitung und Gewährleistung einer optimalen Verbrennung in einem Brennraum des Raketenantriebs.

Ein Einspritzelement in Koaxialbauweise für den Betrieb mit zwei hypergol reagierenden Treibstoffen ist beispielsweise aus der DE 43 05 154 C1 bekannt. Bei diesem Einspritzelement wird der separat der Brennkammer zugeführte Brennstoffstrom mittels eines mit Bohrungen versehenen Strömungsteilers in mehrere über den Umfang des Zuführungskanals verteilte Einzelströme aufgespalten. Dadurch soll eine stabile Verbrennung ohne relevante Druckschwankungen ermöglicht werden.

Weiterhin ist aus der DE 101 30 355 A1 ein Einspritzelement bekannt, bei dem ein einer Brennkammer zugeführter Treibstoffstrom aufgespaltet und die dabei entstehenden zwei Teilströme separiert in die Brennkammer eingespritzt werden. Die Einspritzung erfolgt hierbei in Form zweier zueinander koaxialer Hohlkegel-Strömungen. Dadurch kann eine optimale Tröpfchenaufbereitung mit unterschiedlicher Tröpfchengröße in den beiden Hohlkegel-Strömungen erzielt werden, die spezielle Verbrennungszonen mit unterschiedlichem Verbrennungsverhalten oder eine stufenweise Verbrennung des Treibstoffes ermöglichen.

DE 195 15 879 C1 beschreibt ein Einspritzelement in bikoaxialer Bauweise, d.h. das Einspritzelement umfasst ein inneres Element mit einer ersten Auslassöffnung zur Bildung eines kegelförmigen Oxidatorstrahles und ein koaxial dazu angeordnetes äußeres Element mit weiteren zweiten Auslassöffnungen in Form von Durchtrittskanälen zur Bildung von Treibstoffstrahlen.

In vielen Fällen ist es erforderlich, eine Zone zur Kühlung eines wandnahen Bereichs der Brennkammer zu schaffen. Um dies zu erreichen, wird teilweise auf die Integration von zusätzlichen und speziell für diesen Zweck ausgebildeten Einspritzelementen zurück gegriffen. Diese können einerseits Elemente mit Flüssigkeitsdrall und andererseits auch einfache Elemente mit Bohrungen sein.

Die US 3 439 503 A, US 3 498 059 A und US 2003/074886 A1 beschreiben jeweils ein Einspritzelement mit einem inneren Element mit einer ersten Auslassöffnung und einem koaxial dazu angeordneten äußeren Element mit mindestens einer zur ersten Auslassöffnung koaxial angeordneten zweiten Auslassöffnung zum Aufnehmen und Einspritzen von Treibstoff in einen Brennraum. Das äußere Element weist zusätzlich dritte Auslassöffnungen in Form von Bohrungen zur Bildung einer kühlenden Flüssigkeitsfilmschicht auf, die koaxial zu den ersten und zweiten Auslassöffnungen angeordnet sind.

Aufgabe der vorliegenden Erfindung ist es nun, ein Einspritzelement, insbesondere für einen Raketenantrieb, zu schaffen, welches gleichzeitig zum Einspritzen von Treibstoff in einem Brennraum die Ausbildung einer kühlenden Flüssigkeitsfilmschicht ermöglicht.

Diese Aufgabe wird durch ein Einspritzelement mit den Merkmalen von Anspruch 1 gelöst. Bevorzugte Ausgestaltungen des Einspritzelements ergeben sich aus den abhängigen Ansprüchen.

Ein wesentlicher Gedanke der Erfindung besteht darin, in einem äußeren Element des Einspritzelements Bohrungen vorzusehen, die zur Abtrennung des für eine kühlende Flüssigkeitsfilmschicht notwendigen Treibstoffs dienen. Der Vorteil eines derartigen Einspritzelements besteht darin, dass bereits vorhandene Elemente herkömmlicher Einspritzelemente zum Schaffen einer brennstoff- oder oxidatorreichen Zone herangezogen werden. Ferner wird nur ein Element zur Ausbildung eines kühlenden Filmbereichs benötigt, zusätzliche Elemente sind nicht erforderlich. Es besteht zudem die Möglichkeit, zwei Zonen im Brennraum mit dem erfindungsgemäßen Einspritzelement zu schaffen. Weiterhin kann eine stufenweise Reaktion (Verbrennung) mit der Erfindung erzielt werden. Schließlich eignet sich die Erfindung zum Einsatz in einem großen Betriebsbereich bezüglich eines Mischungsverhältnisses von Treibstoff.

Die Erfindung betrifft nun ein Einspritzelement, insbesondere für einen Raketenantrieb, mit einem inneren Element mit einer ersten Auslassöffnung und einem koaxial dazu angeordneten äußeren Element mit mindestens einer zur ersten Auslassöffnung koaxial angeordneten zweiten Auslassöffnung zum Aufnehmen und Einspritzen von Treibstoff in einem Brennraum. Das äußere Element weist erfindungsgemäß zusätzlich dritte Auslassöffnungen in Form von Bohrungen zur Bildung einer kühlenden Flüssigkeitsfilmschicht auf, die koaxial zu den ersten und zweiten Auslassöffnungen angeordnet sind. Die Bohrungen enden in einem Ringspalt des äußeren Elements und sind in zwei Ebenen geneigt, um den Treibstoff mit einem Drall in den Brennraum einzuspritzen.

Insbesondere kann das äußere Element einen Swirlerraum zum Einprägen eines Dralls in dem zugeführten Treibstoffstrom aufweisen, in dem die Bohrungen vorgesehen sind. In diesem Fall wird Treibstoff zur Bildung der kühlenden Flüssigkeitsfilmschicht über die Bohrungen im Swirlerraum abgezweigt. Swirler sind beispielsweise aus der bereits eingangs genannten DE 101 30 355 A1 bekannt und werden dort auch als Dralleinsatz bezeichnet.

Vorzugsweise sind die Bohrungen in einem Verjüngungsbereich des Swirlerraums vorgesehen. Dadurch können die Bohrungen besonders effizient Treibstoff aufnehmen.

Die Bohrungen können im äußeren Element derart angeordnet sein, dass der Einfluss der durch die Bohrungen ausgebildeten kühlenden Flüssigkeitsfilmschicht auf den in den Brennraum einspritzenden Treibstoff möglichst gering ist. Mit anderen Worten können die Bohrungen so ausgerichtet sein, dass sich die kühlende Flüssigkeitsfilmschicht und der in den Brennraum einspritzende Treibstoff kurz nach Eintritt in den Brennraum weder berühren noch vermischen.

Die kühlende Flüssigkeitsfilmschicht wird mit einem Drall ausgebildet, was sich vorteilhaft auf die Bildung eines optimalen Gemisches im Brennraum auswirken kann.

Bei dem oben erläuterten Einspritzelement gemäß der Erfindung können die Bohrungen über den gesamten Umfang des äußeren bzw. des inneren Elements insbesondere gleichmäßig verteilt sein. Dadurch wird ein kegelförmiger kühlender Flüssigkeitsfilm geschaffen. Dies ist insbesondere bei Antrieben mit nur einem Einspritzelement sinnvoll (Singleelementkammern). Bei derartigen Antrieben dient dann der kegelförmige Flüssigkeitsfilm zum Kühlen der Innenwand des Brennraums und vermeidet eine Anreicherung von überflüssigem Treibstoff während der Phase der Zündung im wandnahen Bereich des Brennraums. Dies spielt insbesondere bei Kurzzeitbetrieben eine große Rolle und verringert wesentlich die Gefahr der Ablagerung von zu viel Rückständen wie beispielsweise Ruß auf der Innenwand der Brennkammer. Wie bereits erwähnt, kann vor allem mittels nur eines Einspritzelements eine Zweizonenverbrennung geschaffen werden.

Insbesondere wenn mehrere Einspritzelemente eingesetzt werden, ist es vorteilhafter, wenn die Bohrungen nur über einen Teil des Umfangs des äußeren bzw. inneren Elements insbesondere gleichmäßig verteilt sind. Vorzugsweise sollten dann die Bohrungen in dem Teil des Umfangs angeordnet sein, der benachbart zur Innenwand des Brennraums liegt, sodass die aus den Bohrungen austretende Flüssigkeitsfilmschicht in Richtung zur Innenwand spritzt.

Bei einer bevorzugten Ausführungsform mit einfachen Bohrungen zur Zuführung einer Komponente sind die Bohrungen vorzugsweise derart ausgerichtet, dass sich aus ihnen austretende Treibstoffstrahlen mit den aus den Komponenten Zuführbohrungen austretenden Komponentenstrahlen vermischen. Dadurch findet eine Vorvermischung von Treibstoff und Komponente statt, durch die es bereits früh zur Tröpfchenbildung kommt. Dies wirkt sich begünstigend bei der Hauptdurchmischung mit einem Hohlkegel eines Swirlerelements aus.

Schließlich betrifft die Erfindung die Verwendung in einem Raketentriebwerk, das einen Brennraum aufweist. Das Raketentriebwerk zeichnet sich dadurch aus, dass es mindestens ein Einspritzelement gemäß der Erfindung aufweist.

Insbesondere ist das mindestens eine Einspritzelement gemäß der Erfindung bei dem Raketentriebwerk derart angeordnet, dass die aus ihm austretende kühlende Flüssigkeitsfilmschicht zumindest teilweise zur Brennrauminnenwand gerichtet ist.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet. Die Zeichnungen zeigen in
- Fig. 1A: ein Beispiel eines Einspritzelements im Querschnitt;
- Fig. 1B: ein Ausführungsbeispiel eines Einspritzelements gemäß der Erfindung im Querschnitt;
- Fig. 2A: ein Beispiel eines Einspritzelements im perspektivischen Querschnitt;
- Fig. 2B: ein Ausführungsbeispiel eines Einspritzelements gemäß der Erfindung im perspektivischen Querschnitt;
- Fig. 2C: die Stirnfläche des in der Fig. 2A dargestellten Einspritzelements in Draufsicht;
- Fig. 2D: die Stirnfläche des in der Fig. 2B dargestellten Einspritzelements in Draufsicht;
- Fig. 3: eine Anordnung von mehreren Einspritzelementen im Brennraum eines Raketentriebwerks;
- Fig. 4: ein weiteres Beispiel eines Einspritzelements im Querschnitt;
- Fig. 5: ein weiteres Beispiel eines Einspritzelements im perspektivischen Querschnitt; und
- Fig.6: ein weiteres Beispiel eines Einspritzelements im perspektivischen Querschnitt.

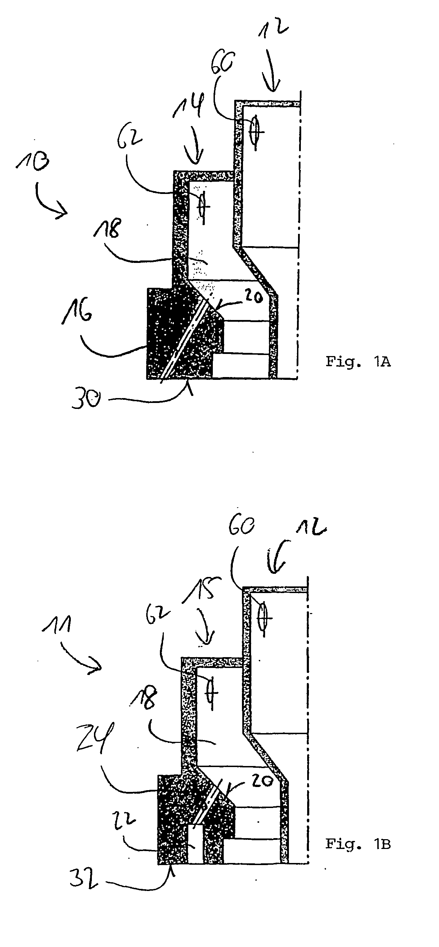

Im Folgenden können gleiche und funktional gleiche Elemente mit den gleichen Bezugszeichen versehen sein. Die in den Fig. 1A, 2A, 2C und 4-6 gezeigten Einspritzelemente sind nicht Teil der mit dem Patentanspruch 1 beanspruchten Erfindung.

In Fig. 1A ist in Querschnittsdarstellung ein Einspritzelement 10 mit einem inneren Element 12 und einem äußeren Element 14 gezeigt. Inneres und äußeres Element 12 bzw. 14 sind zueinander koaxial angeordnet. Beide Elemente nehmen Treibstoff unter hohem Druck auf, der durch jedes Element jeweils in Form eine Hohlkegels in einen nicht dargestellten Brennraum eines Raketenantriebs eingespritzt wird. Der Treibstoff wird über Zuführbohrungen 60 und 62 in das innere bzw. äußere Element 12 bzw. 14 eingespritzt. Das äußere Element 14 besitzt außerdem einen Swirlerraum 18, um dem Treibstoff einen Drall zu geben.

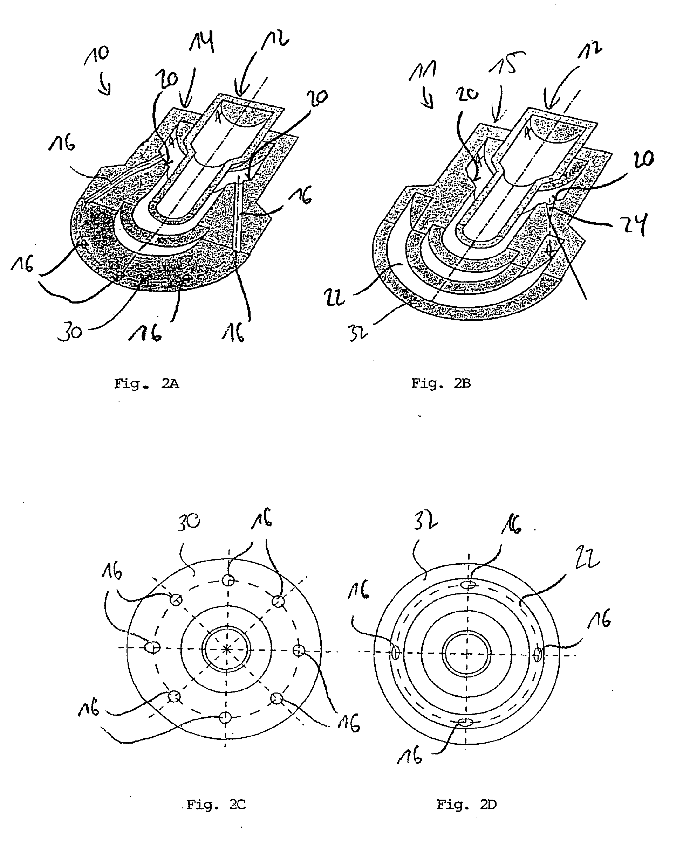

In Fig. 2A ist das Einspritzelement 10 von Fig. 1A in einer perspektivischen Querschnittsdarstellung abgebildet. Hier ist die Stirnfläche 30 des Einspritzelements 10 gut zu erkennen, aus welcher der Treibstoff austritt und in den Brennraum eingespritzt wird.

Das äußere Element 14 weist in seiner Außenwand 28 mehrere Bohrungen 16 auf, die im Verjüngungsbereich 20 des Swirlerraums 18 beginnen und in der dem Brennraum zugewandten Stirnfläche 30 enden. Die Bohrungen 16 nehmen im Swirlerraum 18 befindlichen Treibstoff auf und führen den aufgenommenen Treibstoff dem Brennraum in Form eines weiteren Hohlkegels zu. Die Bohrungen 16 sind derart ausgerichtet, dass der Treibstoff in den Brennraum in Form eines Hohlkegels, der sich in Richtung zur Innenwandung des Brennraums öffnet, in den Brennraum spritzt, um die Innenwandung zu kühlen.

In Fig. 1B ist ein Einspritzelement 11 gemäß der Erfindung im Querschnitt dargestellt, das im Wesentlichen dem Einspritzelement 10 von Fig. 1A ähnelt, bei dem allerdings geneigte Bohrungen 24 im äußeren Element 15 vorgesehen sind, die in einem Ringspalt 22 des äußeren Elements 15 enden. Bei diesem Ausführungsbeispiel wird der Treibstoff über den Ringspalt 22 mit einem Drall in den Brennraum eingespritzt. Hierzu sind die Bohrungen 24 in zwei Ebenen geneigt. Fig. 2B zeigt dieses Ausführungsbeispiel in einer perspektivischen Querschnittsansicht. Durch die Neigung der Bohrungen 24 wird der Treibstoff bereits in den Ringspalt 22 mit einem Drall eingespritzt.

Die Fig. 2C und 2D zeigen die Stirnflächen 30 und 32 der beiden in den Fig. 1A, 2A bzw. 1B, 2B dargestellten Einspritzelemente 10 bzw. 11. Beim ersten Beispiel 10 in Fig. 2C sind insgesamt acht Bohrungen 16 über den Umfang der Stirnfläche 30 gleichmäßig verteilt, d.h. die Bohrungen 16 sind zueinander gleich beabstandet. Beim Ausführungsbeispiel 11 in Fig. 2D münden vier gleichmäßig über den Umfang der Stirnfläche 32 verteilte Bohrungen 16 in den Ringspalt 22. Beide Einspritzelemente 10 und 11 sind als Singleelemente für einen Brennraum bzw. eine Brennkammer geeignet.

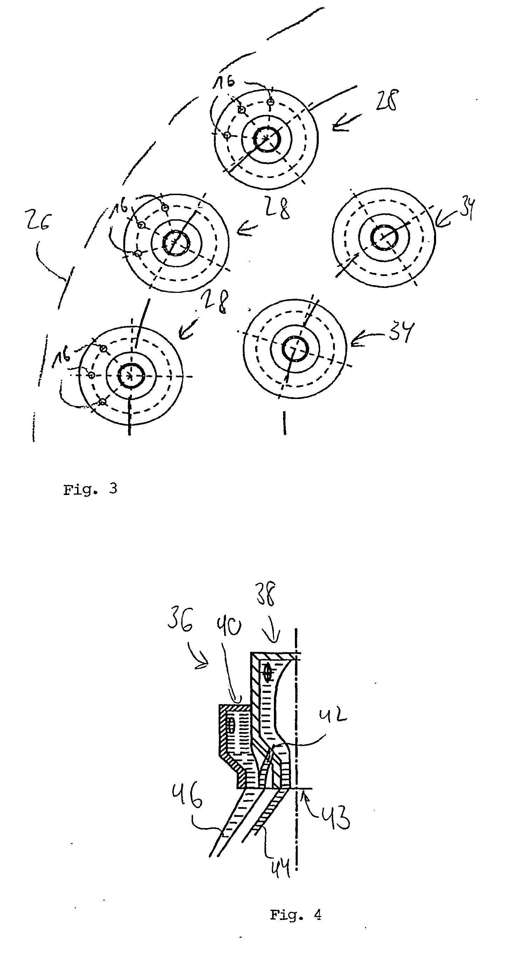

Fig. 3 zeigt die Anordnung mehrerer Einspritzelemente 28 und 34 in einer Brennkammer eines Raketentriebwerks. Die mit 34 bezeichneten Einspritzelemente sind herkömmliche Einspitzelemente, die lediglich zum Einspritzen von Treibstoff in den Brennraum dienen. Die Einspritzelemente 28 gemäss der Erfindung dienen zwar ebenfalls zum Einspritzen von Treibstoff, aber gleichzeitig zum Ausbilden einer die Brennrauminnenwand 26 kühlenden Flüssigkeitsfilmschicht. Sie unterscheiden sich von den oben erläuterten Beispielen 10 und 11 darin, dass Bohrungen 16 nur an dem Teil des Umfangs der Stirnfläche dieser Einspritzelemente 28 vorgesehen sind, der unmittelbar benachbart zur Brennrauminnenwand 26 angeordnet ist, d.h. im wandnahen Bereich des Umfangs der Stirnfläche. Dadurch wird Treibstoff aus den Bohrungen 16 in Richtung zur Brennrauminnenwand gespritzt, um diese zu kühlen. Dieses Ausführungsbeispiel eignet sich für Treibwerke mit mehreren Einspritzelementen wie dargestellt. Durch eine entsprechende verbleibende Lauflänge des Swirlerraums können Ungleichförmigkeiten beeinflusst bzw. entsprechend orientiert werden.

In Fig. 4 ist ein weiteres Beispiel eines Einspritzelements 36 im Querschnitt dargestellt, das ein inneres und ein koaxial zu diesem angeordnetes äußeres Element 38 bzw. 40 aufweist. Bei diesem Beispiel sind Bohrungen 42 im inneren Element 38 vorgesehen, die an der Stirnfläche 43 enden. Die Bohrungen 42 sind derart ausgerichtet, dass der dadurch aus dem inneren Element 38 abgezweigte Treibstoff sich mit dem in den Brennraum durch das äußere Element 40 eingespritzten Treibstoff (Treibstoff-Hohlkegel 46) vermischt. Hierdurch findet eine teilweise Vorvermischung statt, was sich insbesondere bei Elementen vorteilhaft auswirkt, die sich nicht überschneidende Treibstoff-Hohlkegel 44 und 46 bilden, wie bei dem dargestellten Beispiel.

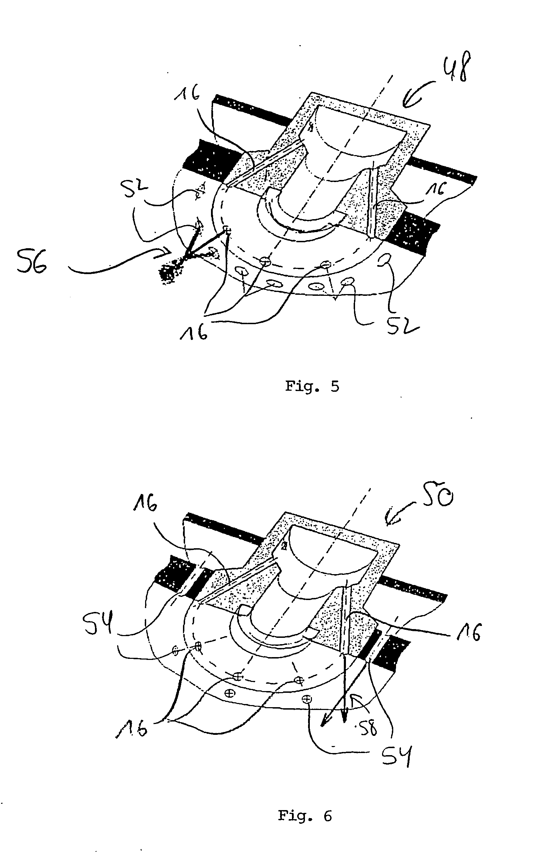

Die Fig. 5 und 6 zeigen schließlich Einspritzelemente 48 und 50, die mit Komponentenzuführungen versehen sind, genauer gesagt mit Bohrungen 52 bzw. 54 für die Zuführung eines Komponenten. Fig. 5 zeigt ein "unlike triplet", bei dem sich drei Flüssigkeitsstrahlen schneiden (bei der Bezugsziffer 56). Dagegen zeigt Fig. 6 ein "unlike doublet", bei dem sich zwei Flüssigkeitsstrahlen schneiden (bei der Bezugsziffer 58). Durch das "Schneiden" der Strahlen kommt es zu einer Vorvermischung und dadurch zu einer Tröpfchenbildung, was sich begünstigend auf die Hauptdurchmischung mit dem Hohlkegel des Swirlerelements auswirkt.

### Bezugszeichen

- 10: Einspritzelement
- 11: Einspritzelement
- 12: inneres Element
- 14: äußeres Element
- 15: äußeres Element
- 16: Bohrung
- 18: Swirlerraum
- 20: Verjüngungsbereich des Swirlerraums 18
- 22: Ringspalt
- 24: geneigte Bohrung
- 26: Brennrauminnenwand
- 28: Einspritzelement
- 30: Stirnfläche des Einspritzelements 10
- 32: Stirnfläche des Einspritzelements 11
- 34: Einspritzelement
- 36: Einspritzelement
- 38: inneres Element
- 40: äußeres Element
- 42: Bohrungen
- 44: innerer Treibstoff-Hohlkegel
- 46: äußerer Treibstoff-Hohlkegel
- 48: Einspritzelement
- 50: Einspritzelement
- 52: Bohrungen für die Zuführung eines Komponenten
- 54: Bohrungen für die Zuführung eines Komponenten
- 56: Schnittpunkt von drei Flüssigkeitsstrahlen
- 58: Schnittpunkt von zwei Flüssigkeitsstrahlen
- 60: Zuführbohrung für Treibstoff
- 62: Zuführbohrung für Treibstoff

## Patentansprüche

1. Einspritzelement (11), insbesondere für einen Raketenantrieb, mit einem inneren Element (12) mit einer ersten Auslassöffnung und einem koaxial dazu angeordneten äußeren Element (15) mit mindestens einer zur ersten Auslassöffnung koaxial angeordneten zweiten Auslassöffnung zum Aufnehmen und Einspritzen von Treibstoff in einen Brennraum, wobei das äußere Element (15) zusätzlich dritte Auslassöffnungen in Form von Bohrungen (24) zur Bildung einer kühlenden Flüssigkeitsfilmschicht aufweist, die koaxial zu den ersten und zweiten Auslassöffnungen angeordnet sind, **dadurch gekennzeichnet, dass** die Bohrungen (24) in einem Ringspalt (22) des äußeren Elements (15) enden und in zwei Ebenen geneigt sind, um den Treibstoff mit einem Drall in den Brennraum einzuspritzen.

2. Einspritzelement nach Anspruch 1, **dadurch gekennzeichnet, dass** das äußere Element (15) einen Swirlerraum (18) aufweist, in dem die Bohrungen (24) vorgesehen sind.

3. Einspritzelement nach Anspruch 2, **dadurch gekennzeichnet, dass** die Bohrungen (24) in einem Verjüngungsbereich (20) des Swirlerraums (18) vorgesehen sind.

4. Einspritzelement nach Anspruch 2, **dadurch gekennzeichnet, dass** die Bohrungen (24) derart im äußeren Element (15) angeordnet und ausgerichtet sind, dass sich die kühlende Flüssigkeitsfilmschicht und der in den Brennraum einspritzende Treibstoff kurz nach Eintritt in den Brennraum weder berühren noch vermischen.

5. Einspritzelement nach einem der vorhergehenden Ansprüche, **dadurch gekennzeichnet, dass** die Bohrungen (24) über den gesamten Umfang des äußeren Elements (15) gleichmäßig verteilt sind.

6. Einspritzelement nach einem der Ansprüche 1 bis 4, **dadurch gekennzeichnet, dass** die Bohrungen (24) über einen Teil des Umfangs des äußeren Elements (15) gleichmäßig verteilt sind.

7. Einspritzelement nach einem der vorhergehenden Ansprüche, **dadurch gekennzeichnet, dass** die Bohrungen (24) derart ausgerichtet sind, dass sich aus ihnen austretende Flüssigkeitsstrahlen mit aus Komponentenzuführbohrungen (52, 54) austretenden Flüssigkeitsstrahlen vermischen.

8. Verwendung eines Einspritzelements (10) nach einem der vorhergehenden Ansprüche in einem Raketentriebwerk, das einen Brennraum aufweist.

9. Verwendung nach Anspruch 8, **dadurch gekennzeichnet, dass** das mindestens eine Einspritzelement (10) derart angeordnet ist, dass die aus ihm austretende kühlende Flüssigkeitsfilmschicht zumindest teilweise zur Brennrauminnenwand (26) gerichtet ist.

## Claims

1. Injection element (11), in particular for a rocket propulsion system, having an inner element (12) with a first outlet opening and an outer element (15), which is arranged coaxially with respect to it, with at least one second outlet opening, which is arranged coaxially with respect to the first outlet opening, for receiving and injecting fuel into a combustion chamber, wherein the outer element (15) additionally has third outlet openings in the form of holes (24) in order to form a cooling liquid film layer, which are arranged coaxially with respect to the first and second outlet openings, **characterized in that** the holes (24) end in an annular gap (22) in the outer element (15) and are inclined on two planes, in order to inject the fuel into the combustion chamber with a swirl.

2. Injection element according to Claim 1, **characterized in that** the outer element (15) has a swirler area (18) in which the holes (24) are provided.

3. Injection element according to Claim 2, **characterized in that** the holes (24) are provided in a tapering area (20) of the swirler area (18).

4. Injection element according to Claim 2, **characterized in that** the holes (24) are arranged and aligned in the outer element (15) such that the cooling liquid film layer and the fuel which is injected into the combustion chamber neither touch nor mix shortly after entering the combustion chamber.

5. Injection element according to one of the preceding claims, **characterized in that** the holes (24) are distributed uniformly over the entire circumference of the outer element (15).

6. Injection element according to one of Claims 1 to 4, **characterized in that** the holes (24) are distributed uniformly over a portion of the circumference of the outer element (15).

7. Injection element according to one of the preceding claims, **characterized in that** the holes (24) are aligned such that liquid jets which emerge from them mix with liquid jets which emerge from component feed holes (52, 54).

8. Use of an injection element (10) according to one of the preceding claims in a rocket motor which has a combustion chamber.

9. Use according to Claim 8, **characterized in that** the at least one injection element (10) is arranged such that the cooling liquid film layer which emerges from it is directed at least partially at the combustion chamber inner wall (26).

## Revendications

1. Dispositif d'injection (11), en particulier pour un propulseur de fusée, avec un élément intérieur (12) présentant une première ouverture de sortie et avec un élément extérieur (15) disposé coaxialement à celui-ci avec au moins une deuxième ouverture de sortie disposée coaxialement à la première ouverture de sortie pour recevoir et injecter du combustible dans une chambre de combustion, dans lequel l'élément extérieur (15) présente en outre des troisièmes ouvertures de sortie en forme d'alésages (24) pour la formation d'une couche de film de liquide de refroidissement, qui sont disposées coaxialement aux première et deuxième ouvertures de sortie, **caractérisé en ce que** les alésages (24) se terminent dans une fente annulaire (22) de l'élément extérieur (15) et sont inclinés dans deux plans, afin d'injecter le combustible dans la chambre de combustion avec mouvement de rotation.

2. Dispositif d'injection selon la revendication 1, **caractérisé en ce que** l'élément extérieur (15) présente une chambre de rotation (18), dans laquelle les alésages (24) sont prévus.

3. Dispositif d'injection selon la revendication 2, **caractérisé en ce que** les alésages (24) sont prévus dans une zone de rétrécissement (20) de la chambre de rotation (18).

4. Dispositif d'injection selon la revendication 2, **caractérisé en ce que** les alésages (24) sont disposés et dirigés dans l'élément extérieur (15) de telle manière que la couche de film de liquide de refroidissement et le combustible injecté dans la chambre de combustion ne se touchent ni se mélangent peu après l'entrée dans la chambre de combustion.

5. Dispositif d'injection selon l'une quelconque des revendications précédentes, **caractérisé en ce que** les alésages (24) sont répartis uniformément sur tout le pourtour de l'autre élément (15).

6. Dispositif d'injection selon l'une quelconque des revendications 1 à 4, **caractérisé en ce que** les alésages (24) sont répartis uniformément sur une partie du pourtour de l'autre élément (15).

7. Dispositif d'injection selon l'une quelconque des revendications précédentes, **caractérisé en ce que** les alésages (24) sont orientés de telle manière que des jets de liquide sortant de ceux-ci se mélangent avec des jets de liquide sortant d'alésages d'arrivée de composants (52, 54).

8. Utilisation d'un dispositif d'injection (10) selon l'une quelconque des revendications précédentes dans un groupe de propulsion de fusée, qui comporte une chambre de combustion.

9. Utilisation selon la revendication 8, **caractérisée en ce que** ledit au moins un élément d'injection (10) est disposé de telle manière que la couche de film de liquide de refroidissement sortant de celui-ci soit orientée au moins partiellement vers la paroi intérieure (26) de la chambre de combustion.
